# EUROPEAN PATENT APPLICATION

(11) **EP 3 735 083 A1**
(43) Date of publication of application: **04.11.2020**
(21) Application number: 19172626.4
(22) Date of filing: 03.05.2019
(51) Int. Cl.: H04W 72/12

(54) **DEVICES AND METHODS FOR CROSS-SLOT SCHEDULING ADAPTATION**

(71) Applicant: Panasonic Intellectual Property Corporation of America, Torrance, CA 90503 (US)
(72) Inventor: LI, Hongchao, 63225 Langen (DE); SUZUKI, Hidetoshi, Osaka, Osaka 540-6207 (JP); KUANG, Quan, 63225 Langen (DE); BHAMRI, Ankit, 63225 Langen (DE)
(74) Representative: Grünecker Patent- und Rechtsanwälte PartG mbB

(57) **Abstract**

The disclosure relates to a communication device, a base station and respective methods for a communication device and a base station. The communication device comprises a transceiver and a circuitry, which, in operation, controls the transceiver to: receive or transmit data K time slots after receiving a scheduling grant, wherein K is not smaller than a minimum scheduling gap, and receive control information; and when the control information indicates a second minimum scheduling gap different from a first minimum scheduling gap currently applied, determines that K is not smaller than the first minimum scheduling gap and the second minimum scheduling gap for an interval starting from the reception of the control information.

## Description

### BACKGROUND

### Technical field

The present disclosure relates to transmission and reception of signals in a communication system. In particular, the present disclosure relates to methods and apparatuses for such transmission and reception.

### Description of the Related Art

Currently, the 3rd Generation Partnership Project (3GPP) works at the next release (Release 15) of technical specifications for the next generation cellular technology, which is also called fifth generation (5G) also including "New Radio" (NR) radio access technology (RAT), which operates in frequency ranges up to 100 GHz. The NR is a follower of the current technology represented by Long Term Evolution (LTE) and LTE Advanced (LTE-A). The NR is planed to facilitate a single technical framework addressing all usage scenarios, requirements and deployment scenarios defined including, for instance, enhanced mobile broadband (eMBB), ultra-reliable low-latency communications (URLLC), massive machine type communication (mMTC) and the like. For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC may include scenarios with large number of devices with non-time critical data transfers such as smart wearables and sensor networks. The services eMBB and URLLC are similar in that they both demand a very broad bandwidth, however are different in that the URLLC service requires ultra-low latencies. Physical layer is based on time-frequency resources (such as Orthogonal Frequency Division Multiplexing, OFDM in LTE) and may support multiple antenna operation.

For systems like LTE and NR, further improvements and options may facilitating efficient operation of the communication system as well as particular devices pertaining to the system.

### SUMMARY

One non-limiting and exemplary embodiment facilitates providing efficient signaling in a wireless communication system.

In one embodiment, the techniques disclosed here feature a communication device comprising: a transceiver for receiving and transmitting signals; and a circuitry that, in operation, controls the transceiver to: receive or transmit data K time slots after receiving a scheduling grant, wherein K is not smaller than a minimum scheduling gap, and receive control information; and when the control information indicates a second minimum scheduling gap different from a first minimum scheduling gap currently applied, determines that K is not smaller than the first minimum scheduling gap and the second minimum scheduling gap for an interval starting from the reception of the control information.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Figure 1**: is a block diagram illustrating a communication system in which embodiments described therein may be employed.
- **Figure 2**: is a block diagram illustrating a communication device and a network device.
- **Figure 3**: is a schematic drawing illustrating an exemplary TDRA table.
- **Figure 4**: is a schematic drawing illustrating cross-slot scheduling.
- **Figure 5**: is a schematic drawing illustrating switching from a slower scheduling to a faster scheduling.
- **Figure 6**: is a schematic drawing illustrating switching from a faster scheduling to a slower scheduling.
- **Figure 7**: is a schematic drawing illustrating switching from a faster to slower scheduling with an additional condition.
- **Figure 8**: is a block diagram illustrating an exemplary functional structure of the circuitry.

### DETAILED DESCRIPTION

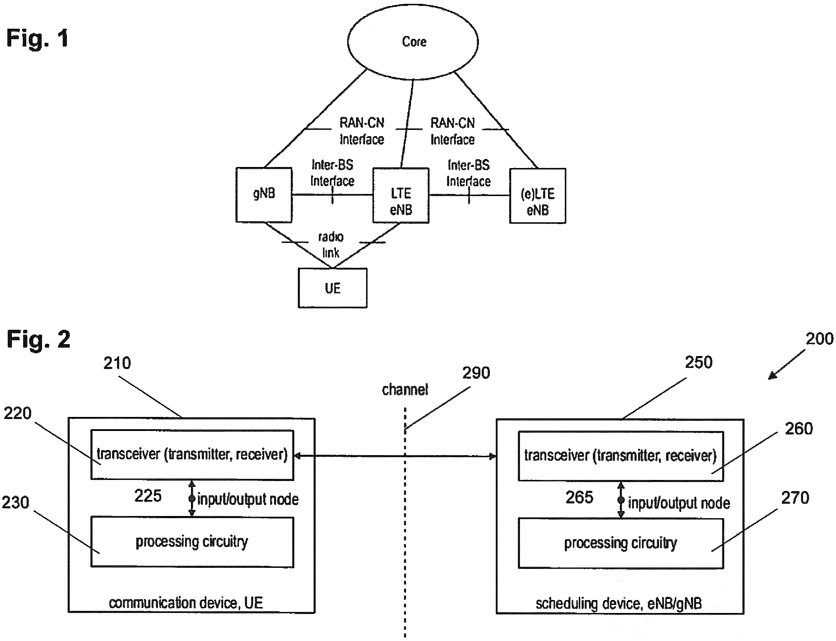

Figure 1 shows an exemplary example of a communication system including a base station and a terminal and a core network. Such communication system may be a 3GPP system such as NR and/or LTE and/or UMTS. For example, as illustrated in Figure 1, the base station (BS) may be a gNB (e.g. an NR gNB) or an eNB (e.g. an LTE). However, the present disclosure is not limited to these 3GPP systems or to any other systems. Even though the embodiments and exemplary implementations are described using some terminology of 3GPP systems, the present disclosure is also applicable to any other communication systems, and in particular in any cellular, wireless and/or mobile systems.

A communication device may be a terminal, which is referred to in the LTE and NR as a user equipment (UE). This may be a mobile device such as a wireless phone, smartphone, or an USB stick with the functionality of a user equipment. However, the term mobile device is not limited thereto, in general, a relay may also have functionality of such mobile device, and a mobile device may also work as a relay. Still further, the communication device may be any machine-type communication device, such as loT device or the like.

Base station is a network node, e.g. forming a part of the network for providing services to terminals. Base station is a network node, which provides wireless access to terminals. In LTE as well as in NR, Radio Resource Control (RRC) protocol is used between the base station (eNB, gNB) and the terminal (UE) for configuration. RRC is a control protocol, which resides over physical and Medium Access Control (MAC) layer. RRC defines for UE various states according to the transmission/reception behavior. For example, the RRC_CONNECTED state means, among others, that the UE has an established radio access bearer and can transmit and/or receive data. On the other hand, RRC_IDLE mode means, among others, that a UE does not have a radio access bearer configured but may have signaling radio bearer established.

Cross-slot scheduling has been envisaged among 3GPP RAN1 study items (SI) and work items (WI) as it may facilitate power saving. One of the main objectives is to specify procedures of cross-slot scheduling so as to enable communication devices to take advantage of power saving techniques. The present disclosure provides for more efficient cross-scheduling framework facilitating option of power saving for some communication devices.

For the purpose of scheduling, a communication device such as user equipment (UE) may be notified of resources on which it (i.e., the UE itself) is to transmit/receive data in the Downlink Control Information (DCI), which are received by the UE in the Physical Downlink Control Channel (PDCCH). For instance, in case the UE is to receive data, the DCI may include a corresponding indication of resources in the Physical Downlink Shared Channel (PDSCH), and/or, in case the UE is to transmit data, the DCI may include a corresponding indication of resources in the Physical Uplink Shared Channel (PUSCH). Such indications may indicate the position of the resources in frequency and/or time domain, and or may indicate the length in terms of symbols as described in more detail below. In addition thereto, the DCI may provide further transmission parameters such as modulation and coding scheme (MCS) beamforming / precoding or other Multiple-Output Multiple-Input (MIMO) parameters or the like. The PDCCH is transmitted from the transmitter in a network (access) node such as base station to a communication device. In order to receive PDCCH, a communication device typically has to monitor certain resources referred to as a search space or CORESET (control resource set). Monitoring means blindly decoding to find out whether or not here is control information directed to the monitoring communication device. This is achieved, for instance, by providing (by the scheduling node) a cyclic redundancy check for the control information scrambled with the identity of the communication device to which the control information is directed.

As for instance specified in Release 15 (NR), the scheduling timing (e.g., for the scheduling of resources described above) may be indicated within the DCI by using a Time Domain Resource Allocation (TDRA) table. In particular, a UE may be notified of allocated resources by indicating one entry (typically a row of the table) of said TDRA table in the DCI, for instance, by signaling an entry (row) index. The term table is used herein as a logical term, as the TDRA entries may be summarized as a table in a standard specification. However, it is noted that the present disclosure is not limited to any particular physical storage organization and the TDRA table may be implemented in any manner as a set of entries associated with the respective entry indices.

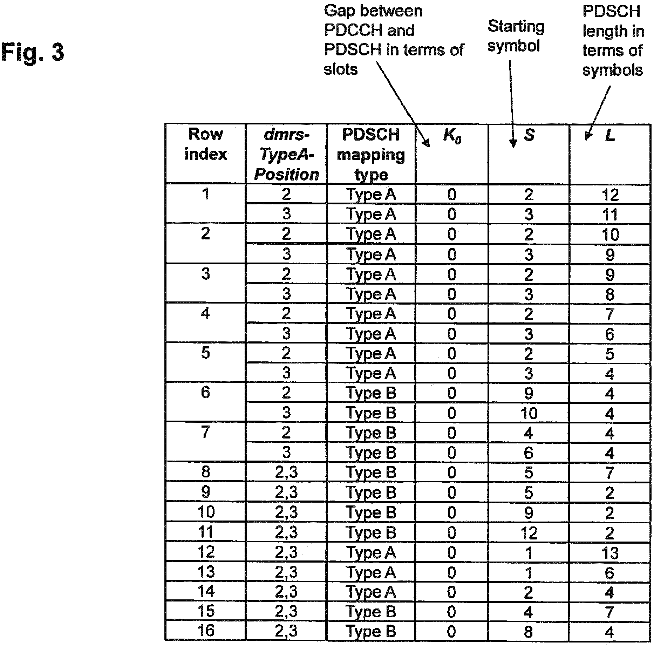

Figure 3 shows an exemplary TDRA table. The TDRA table comprises a column specifying a row index which labels an entry (row of the table) including values for each of the columns. In this exemplary TDRA table, there is a column specifying a dmrs-TypeA-Position, a column specifying a PDSCH mapping type, a column specifying a K₀ value, a column specifying an S value, and/or a column specifying an L value. The DCI indication of a row of a TDRA table (one value of the row index) thus corresponds to an indication of a combination of specific values of dmrs-TypeA-Position, PDSCH mapping type, K0 value, S value, and/or L value.

In this example, the dmrs-TypeA-Position is a parameter relating to the position of the demodulation reference signal. This parameter is specified by another signaling parameter. Based on whether the parameter takes value of 2 or 3, the row index refers to a slightly different time domain resource allocation. The parameters dmrs-TypeA-Position and PDSCH mapping type are of no further importance for the present disclosure; details can be found in NR standard specifications. In general, the TDRA table may include more or less parameters a those shown with reference to Figure 3. The actual resource allocation is provided by the parameters K0, S, and L for this exemplary downlink TDRA table. In NR, there is a set of TDRA tables for downlink resource allocation and the TDRA table of Figure 3 is one of them. Moreover, there is a set of TDRA tables for uplink resource allocation which differs from the downlink table set. In case of uplink TDRA tables, the tree parameters specifying resource allocation (resource grant) are K2, S, and L. It is noted that the present disclosure may be readily employed for NR including the tables as currently defined, but is not limited thereto. It may also be applied to sidelink; it may be applied to different tables or even to resource allocation organized (signaled) in a different way.

The K0 value indicated in DCI the DCI by means of the TDRA table row index indicates a gap between the slot of the PDCCH and the slot of the PDSCH in terms of slots. Here, the slot of the PDCCH is the slot in which the DCI indicating the respective K0 is received, henceforth also denoted as scheduling slot or slot carrying scheduling information or slot carrying scheduling grant. Furthermore, the slot of the PDSCH may be the slot (or the first/starting slot) in which the scheduled resources are located, e.g., the slot in which data are to be transmitted/received. In other words, K0 may indicate the relative position (in time domain) of the slot including the resources scheduled for reception/transmission with respect to a reference slot, and this reference slot may be the slot of the DCI indicating said K0. More specifically, K0 may indicate the size of the gap or the relative position in terms/units of slots. It is noted that a particular value of K0, e.g., the value zero in the case of the table shown in Figure 3, may indicate that there is no gap and that the resources on which data are to be transmitted/received are located in the same slot as the DCI indicating the K0. Moreover, this is only an example, and in general, the scheduling gap may be indicated including or not including the first slot (PDCCH) slot and/or the slot in which the allocated resource starts (first PDSCH slot, also referred to as resource slot or scheduled slot). In general, the scheduling gap (in NR denoted as K0 for downlink and K2 for uplink) specifies the gap (time interval) between the scheduling resource and scheduled resource.

The terms "*slot*" and "*time slot*" are in general used interchangeably in this disclosure. In general, slot refers to a time domain resource in this disclosure. In case of NR, the time interval corresponding to a slot depends on numerology, which is a combination of symbol duration, subcarrier spacing and cyclical prefix. A slot consists of a specified number of symbols which may be one or more. A specified number of slots forms a subframe, and a plurality of subframes may form a radio frame. The term "specified" refers to the fact that both UE and gNB have knowledge of it. This may be achieved by signaling such configuration beforehand, i.e. before starting the scheduling procedure or with the scheduling procedure, some parameters of the resources provided by the system may be also fixed and given by a standard.

It is further noted that the case of an UL grant in the DCI is similar to the above explained case of an DL grant. However, the scheduled resources are in the PUSCH (and not the PDSCH), and the number indicating the gap is usually denoted as K2 (and not K0). In the present disclosure, K will be used to refer to any one of K0, K2, or a K for other type of link such as sidelink.

Furthermore, the S value indicated in DCI may indicate the position of the starting symbol of the scheduled resources in the relevant slot (which is the slot in which the scheduled resources are to be received/transmitted, given by K0/K2).

Finally, the L value indicated in DCI may indicate the length of the PDSCH/PUSCH in terms/units of symbols and/or the length of the scheduled resource in terms/units of symbols. Although in Fig. 3 all entries specify a K0 value of zero, in general a TDRA table includes entries with different (integer) values of K0. For instance, one entry of a TDRA table may correspond to a K0 value of 1, while another entry of the same TDRA table may correspond to a K0 value of 2. The possibility of a non-zero K value allows cross slot scheduling, which refers to the case in which a DCI scheduling resources and the corresponding resources scheduled in said DCI are located in different slots. In general, cross-slot scheduling may facilitate providing several advantages in terms of power saving.

For instance, cross-slot scheduling may save power by relaxing the PDCCH processing timeline, for instance, since a UE may not be required to decode PDCCH as fast as in the same-slot scheduling case (in which the DCI scheduling resources and the corresponding resources scheduled in said DCI are located in the same slots). Furthermore, cross-slot scheduling may allow late PDSCH buffering. Unlike for same-slot scheduling, in case of cross-slot scheduling, a UE may not have to buffer all the symbols after receiving PDCCH, until it decodes the PDCCH and realizes where the scheduled resources are actually located.

In particular, when a UE knows the minimum (scheduling) gap between PDCCH and scheduled PDSCH, i.e. knows the minimum K that may be indicated in a DCI/PDCCH, the UE may skip the PDSCH buffering at least in the current slot (e.g., the slot in which the PDCCH is received) and the next K-1 slots. Moreover, cross-slot scheduling potential may allow more micro-sleep periods in this time interval especially in case no PDCCH is to be scheduled until the scheduled resource is received.

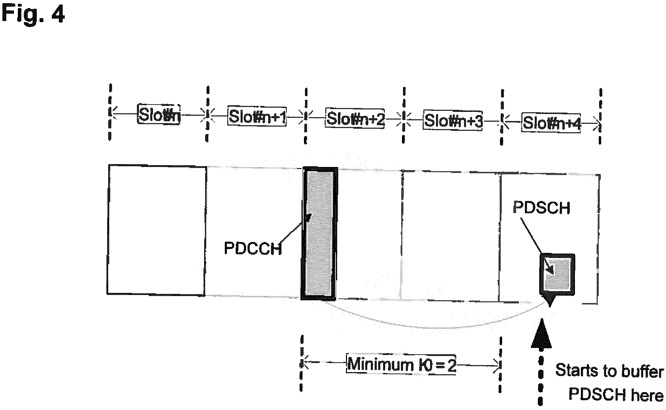

This is illustrated in Figure 4, which shows the case of a minimum K value of 2 (more precisely, K0 = 2 in the figure). A UE, if it has knowledge of minimum K, is neither required to monitor PDCCH during the rest of slot#n+2 and slot#n+3, nor required to perform measurements during these slots, nor required to buffer received data (PDSCH). The UE can choose to go to micro-sleep during the remaining part of slot#n+2 an/or slot slot#n+3 in order to save power. However, please note that not all UEs have to implement and/or employ power saving. Provision of K increases the flexibility and opportunity for power saving but does not prescribe it.

Figure 4 is an example based on current NR specification. It illustrates a specific case, in which the PDCCH is transmitted in the entire first BWP, but the resources are only scheduled in a subset of physical resource blocks, PRBs, of the bandwidth part (BWP). It is noted that Figure 4 may also apply to cases in which the BWP concept is not employed, i.e. the entire bandwidth is always allocable. A PRB refers to a resource unit with a predetermined number of subcarriers of certain numerology and certain number of symbols.

In the current Rel. 15 NR, each configured TDRA table is signalled within configuration relating to PDSCH on RRC layer (PDSCH-Config), which may be within a specific container pertaining to a Bandwidth Part ((BWP)-DownlinkDedicated). Therefore, if TDRA table is higher layer configured, the TDRA table may be BWP-specific. A communication device, e.g., UE, may use a default table or may apply the higher layer configured pdsch-TimeDomainAllocationList in either pdsch-ConfigCommon or pdsch-Config. However, this is only one possible detailed example of interaction between TDRA configuration and BWP concept of NR. The present invention does not presuppose employing BWP and is ont limited to resource allocation using TDRA tables.

RRC (Radio Resource Control) signaling is used by the gNB (gNodeB, an exemplary name of the base station in NR corresponding to the eNodeB (enhanced NodeB) of LTE (Long Term Evolution)) to configure semi-statically or statically, parameters of a radio access bearer and other parameters in the communication device (UE). As defined in the section 4.4.5 of TS 38.211 V15.0.0 (2017-12), a bandwidth part (or carrier bandwidth part) is a contiguous set of physical resource blocks as defined in clause 4.4.4.3, selected from a contiguous subset of the common resource blocks defined in clause 4.4.4.2 for a given numerology on a given carrier. It is defined in the specification TS 38.211 V15.0.0 that a UE can be configured with up to four carrier bandwidth parts in the downlink with a single downlink carrier bandwidth part being active at a given time. The UE is not expected to receive PDSCH (Physical Downlink Shared Channel), PDCCH (Physical Downlink Control Channel), CSI-RS (Downlink Reference Signals for Estimation of Channel State Information), or TRS (Tracking Reference Signals for fine time and frequency tracking of channel) outside an active bandwidth part.

It is further defined in the specification that a UE can be configured with up to four carrier bandwidth parts in the uplink with a single uplink carrier bandwidth part being active at a given time. If a UE is configured with a supplementary uplink, the UE can in addition be configured with up to four carrier bandwidth parts in the supplementary uplink with a single supplementary uplink carrier bandwidth part being active at a given time. The UE shall not transmit PUSCH or PUCCH outside an active bandwidth part. A numerology is defined by subcarrier spacing and cyclic prefix (CP). A resource block is generally defined as 12 consecutive subcarriers in the frequency domain. Physical resource blocks (PRB) are numbered within a BWP, the PRB numbering of for the BWP starting from 0.

The size of a BWP can vary from a minimum of 1 PRB to the maximum size of system bandwidth. Currently, up to four BWPs can be configured by higher layer parameters for each DL (downlink) and UL (uplink), with a single active downlink and uplink BWP in a given TTI (transmission time interval). However, the disclosure is not limited to the case defined in TS 38.211 of a UE being configured with up to four bandwidth parts. The number of bandwidth parts may be greater than 4 in the uplink and/or downlink. For example, a UE may be configured with 8 BWPs.

TTI (Transmission Time Interval) determines the timing granularity for scheduling assignment. One TTI is the time interval in which given signals is mapped to the physical layer. The TTI length can vary from 14-symbols (slot-based scheduling) to up to 2-symbols (non-slot based scheduling). Downlink and uplink transmissions are specified to be organized into frames (10 ms duration) consisting of 10 subframes (1 ms duration). In slot-based transmission, a subframe, in return, is divided into slots, the number of slots being defined by the numerology / subcarrier spacing and the specified values range between 10 slots for a subcarrier spacing of 15 kHz to 320 slots for a subcarrier spacing of 240 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.0.0 (2017-12). However, transmission may also be non-slot based. In non slot-based communication, the minimum length of a TTI may be 2 OFDM symbols. The BWP concept in NR is to allow the dynamic configuration of a relatively small active bandwidth for smaller data packets, which allows power saving for the UE because for a small active BWP the UE needs to monitor less frequencies or use less frequencies for transmission.

The active bandwidth part for a user equipment (e.g. the bandwidth part to be used by a UE for transmission and reception of signals in a TTI), can be switched among the configured BWPs. For instance, depending on current needs, the active BWP may be switched to a larger BWP, or, in order to save battery power for the UE, to a smaller BWP. This is possible by dynamical indication in the DCI of the active BWP to be used in the next TTI. A DCI transports downlink and uplink scheduling information (e.g. resource assignments and/or grants), requests for aperiodic CQI reports, or uplink power control commands for one cell and one RNTI. DCI coding includes information element multiplexing, CRC (Cyclic Redundancy Check) attachment, channel coding, and rate matching. A DCI carries transmission parameters such as MCS, redundancy version or HARQ process number. A DCI consists of several field (e.g. bit fields/ bitmaps) carrying different types of control information or control parameters. The location of a certain parameter, and the number of bits coding the respective parameter are known to the base station transmitting the DCI and the UE receiving the DCI. However, such switching of the active BWP adds to the latency because the UE needs to decode the DCI and then start hardware tuning to the new active BWP.

In the current NR discussion, the minimum applicable value of K0 (or K2) for an active downlink, DL, (or uplink, UL) bandwidth part may be indicated from the gNB to the UE in order to enable profiting from power saving. The indication may be performed by one or more of the ways listed below:
a) An indication of a subset of TDRA entries, e.g., bit-map based indication may be provided. The minimum K among the entries of the subset may then be determined by the UE.
b) Indication of one active table from a multiple configured TDRA tables, the table having certain minimum K which the UE may then determine by checking the table.
c) Explicit indication of the minimum applicable value for instance in a DCI or in a higher layer signalling, or the like.

However, it may pose some difficulties to apply a minimum for K in cross-slot and cross-BWP scheduling. Similar problems arise without considering cross-BWP scheduling. Some possible issues are explained in the following.

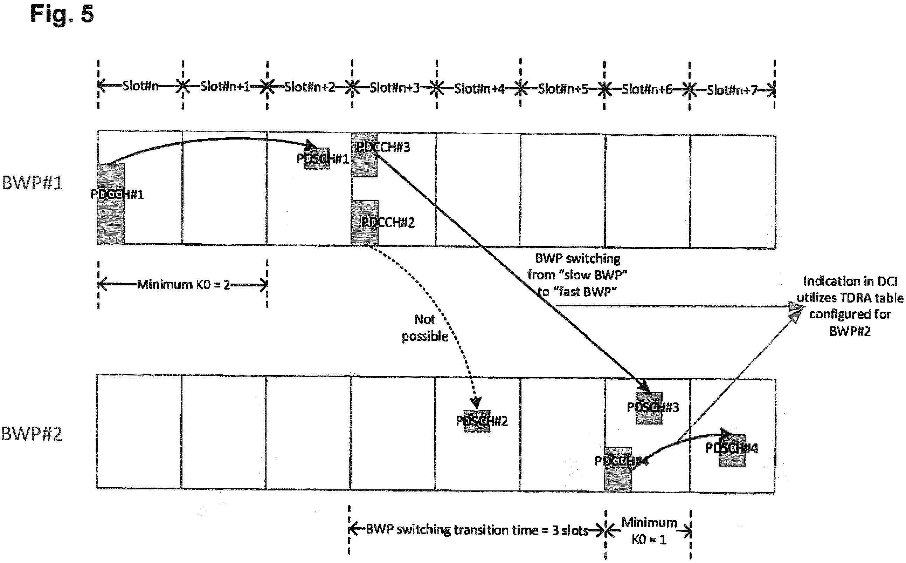

Figure 5 shows an example of a cross-slot scheduling adaptation by switching from a slower BWP (BWP#1) to a faster BWP (BWP#2). The two BWPs, BWP#1 and BWP#2, may be provided for power saving purposes and are configured with different minimum K0 values, which correspond to different processing timelines. More specifically, in the example shown in Fig. 5, BWP#1 is configured with a TDRA table whose minimum K0 is 2 (thus, denoted as slower), while BWP#2 is configured with TDRA table whose minimum K0 is 1 (thus, denoted as faster). Furthermore, in the present example, the BWP switching DCI, PDSCH scheduling utilizes the TDRA table linked with the target BWP (BWP#2). In other words, the scheduling grant (e.g., the K value indicated therein) in the DCI that also indicates a BWP switch, refers to the TDRA table of the target BWP (BWP#2), which does not have an entry with K0 = 0.

After the transition time (Slot#n+6 and later), PDCCHs are transmitted in BWP#2 using the TDRA with minimum K0 = 1. However, since in the present example the transition time is 3 slots, BWP#2 is used for scheduling/PDCCH only starting from Slot#n+6. In consequence, since the TDRA associated with BWP#2 has no entry with K0=0, PDSCH#3 (i.e., resources in Slot#n+6) cannot be scheduled by a PDCCH in BWP#2. More specifically, by PDCCH#4, which is the earliest possible scheduling grant in BWP#2 after switching can only schedule resources in Slot#n+7 (PDSCH#4) or later. Thus, if PDSCH#3 needs to be scheduled, it is only possible by using PDCCH#3 but, the K0 indicated together with the switching DCI, has to be 3 in this case. Since, in the present example the target BWP TDRA table is utilized during the transition time, the "faster BWP" (BWP#2) needs to have larger K0 values in TDRA table to make the initial slots at the beginning of BWP transition schedulable. However, to make the PDSCH buffering behaviour as clear as possible, it is sensible to have efficient TDRA table with more concentrated K0 values for power saving. Because the UE buffering behaviour is better to be aligned and more localized in time domain.

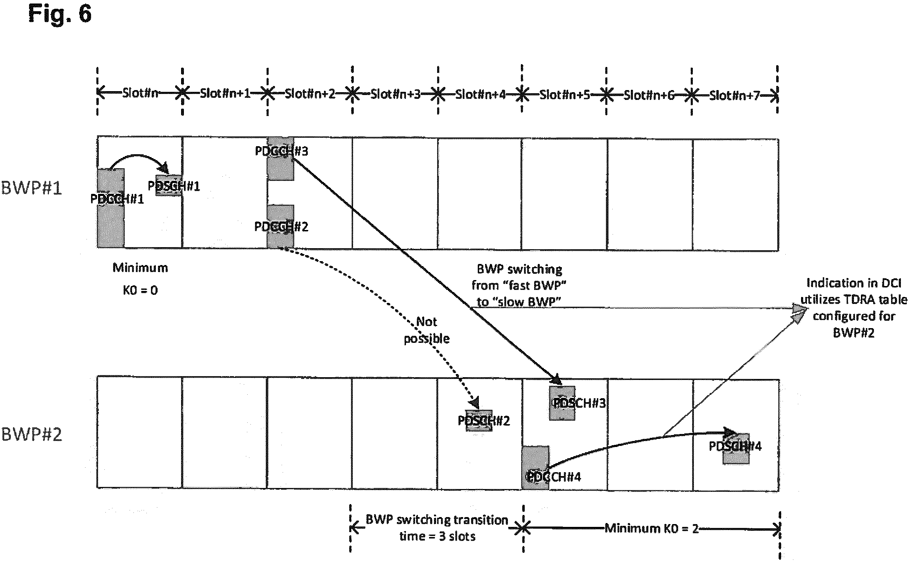

Figure 6 shows an example of cross-slot scheduling adaptation by switching from a faster BWP to a slower BWP. It is noted that now the fast BWP is denoted as BWP#1, and the slower BWP is denoted as BWP#2. More specifically, in the present example BWP#1 is configured with a TDRA table with minimum K0 = 0, while BWP#2 is configured with TDRA table with minimum K0 = 2. Again, the switching transition time is 3 slots, and, again, during the switching transition time the target TDRA table (the table of BWP#2) is used.

Thus, the scheduling of PDSCH#3 by PDCCH#3 uses the TDRA table for BWP#2, whose K0 value are equal or larger than 2. Considering the transition period, the K0 is 3. Hence, to make the first slots after the BWP switching schedulable (in the present example. Slot#n+6 and Slot#n+7 cannot be scheduled by means of PDCCH in BWP#2), special K0 value(s) may be needed in the TDRA table by considering the actual transition period. Thus, depending on the actually used values of K0 in the TDRA table associated with BWP#2, the first few slots after the transition time may (also) not be schedulable by means of PDCCH transmitted/received in BWP#1 during the transition period (e.g., by means of the scheduling grant in the DCI that also indicates a BWP switch).

As can be seen from the issues described above with reference to Figure 5 and 6, in order to achieve a better power saving performance, scheduling flexibility may be limited. This can be performed in context of BWP for instance by TDRA configuration during BWP switching. If a TDRA table has very flexible K values (i.e. includes a high range of K), the power saving gain cannot be achieved, as it typically depends on the minimum of K rather than the dynamically set K. It is noted that similar issues occur not only in the context of multiple BWPs but in any case when the TDRA table, or - in general - minimum K, needs to be changed/reconfigured.

In order to resolve the issues, the present invention provides various embodiments described below, which facilitate adjustment of time-domain scheduling during switching between two values of minimum scheduling gap. In particular, the embodiments include:
I. Implementing a rule specifying that during switching between two values for minimum scheduling gap (K), the longer of the switched gaps is employed. This rule can be implemented in various non-limiting ways. For example, in the context of BWP switching, a TDRA table for the source BWP may be valid/enabled only with certain condition, e.g. if cross-slot scheduling for power saving is enabled. Alternatively, the minimum K0 may be changed and starts after the switching (transition) time. Alternatively, target BWP TDRA is conditionally valid, e.g. depending on BWP combinations, for instance only when switching from smaller minimum gap to larger minimum gap.
II. Providing an offset value which is added to the value of the K signaled in the resource grant to localize the scheduled resource.
III. For power saving purpose, the switching DCI does not include data channel scheduling field. In other words, the slot in which the switching between two values of minimum K for a communication device is signaled does not carry scheduling grant.
IV. Not applying power-saving for a slot in which a common search space is to be monitored, assuming that common search space applies the lowest value of K.

Since the present disclosure relates to scheduling, both entities, a scheduled device (typically communication device) and scheduling device (typically network node) take part. Thus, the present disclosure provides methods and apparatuses implementing both functionalities - that of a scheduling device and that of a scheduled device. The present invention further provides a system including a scheduled and scheduling device, as well as a corresponding methods and programs.

An example of such communication system 200 is illustrated in Figure 2. The communication system 200 may be a wireless communication system in accordance with the technical specifications of 5G, in particular a NR communication system. Figure 2 illustrates a general, simplified and exemplary block diagram of a user equipment 210 (also termed communication device) and a scheduling device 250 which is here exemplarily assumed to be located in the base station (network node) e.g. the eNB or gNB. However, in general, a scheduling device may also be a terminal in case of a sidelink connection between two terminals. Moreover, in particular with respect to the use cases of URLLC; eMBB, and mMTC, the communication device 210 may also be a sensor device, a wearable device, or a connected vehicle, or a controller of an automated machine in an industrial factory. Further, a communication device 210 may be able to function as a relay between base station 250 and another communication device (e.g. the disclosure is not limited to communication "terminals" or user "terminals").

The UE and eNB/gNB are communicating with each other over a (wireless) physical channel 290 respectively using their transceivers 220 (UE side) and 260 (base station side). Together, the base station 250 and the terminal 210 form the communication system 200. The communication system 200 may further include other entities such as those shown in Figure 1.

The communication device 210 may comprise the transceiver 220 and a (processing) circuitry 230, and the scheduling device 250 may comprise the transceiver 260 and a (processing) circuitry 270. The transceiver 210 in turn may comprise and/or function as a receiver and/or a transmitter. In this disclosure, in other words, the term "transceiver" is used for hardware and software components that allow the communication device 210, or, respectively base station 250 to transmit and/or receive radio signals over a wireless channel 290. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

The circuitries 230, 270 may be one or more pieces of hardware such as one or more processors or any LSIs. Between the transceiver and the processing circuitry there is an input/output point 225, 265 (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto.

### Embodiment I

In Embodiment I, during switching between a first value of minimum K and second value of minimum K, the larger of the two values is employed. K denotes the scheduling gap, i.e. time interval between the scheduling grant and the start of the scheduled resource in given units (e.g. time slots).

According to an aspect of this embodiment, a communication device 210 is provided that comprises a circuitry 230 and a transceiver 220 for receiving and transmitting signals.

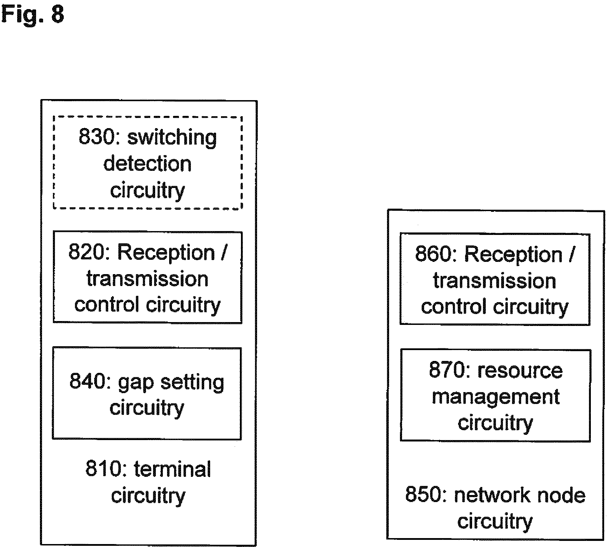

The circuitry 230, in operation, controls the transceiver 220 to receive or transmit data K time slots after (or starting from) reception of a scheduling grant, wherein K is not smaller than a minimum scheduling gap. An exemplary functional structure of the circuitry 230 is shown in Figure 8 as terminal circuitry 810. The control of the transceiver 220 may be performed by the reception / transmission control circuitry 820.

For example, the reception of data may be performed over a physical downlink shared channel, PDSCH, and transmission of data may be performed over a physical uplink shared channel, PUSCH. This corresponds to an example, in which the scheduling entity is the network node 250 and the communication device 210 is scheduled entity. The scheduling grant may be carried by downlink control information, DCI within a physical control channel, PDCCH. When saying that K is not smaller than a minimum scheduling gap it is implied that the scheduling grant shall not indicate (e.g. when following standard) or is not capable of indicating (e.g. as there is no signalable value associated with such value) any K smaller than the minimum K. Advantageously, the value of minimum K is known to both the scheduling entity and the scheduled entity.

For example, K is an integer which may be zero or larger. K equal to zero means that the data reception or transmission is to be performed in the same slot in which the scheduling grant was received. There may also be an upper limit for K in some exemplary implementations. For example, if cross-subframe or cross-frame scheduling is not permitted, the maximum value of K may correspond to the number of slots in a subframe or frame.

The circuitry 810 (in particular the reception / transmission control circuitry 820), in operation, further controls the transceiver 220 to receive control information. The control information may be a physical layer signaling information such as downlink control information, DCI, carried by the PDCCH. However, in general, the control information can be signaled in a different way and/or on different layer. For example, the control information may be transmitted on MAC or RRC layer or the like. Signaling by DCI provides high flexibility as it enables dynamic and fast signaling.

Furthermore, the circuitry 810 (in particular a gap setting circuitry 840), in operation, determines, when the control information indicates a second minimum scheduling gap different from a first minimum scheduling gap currently applied, that K is not smaller than the first minimum scheduling gap and the second minimum scheduling gap for an interval starting from the reception of the control information.

There may be also a switching detection circuitry 830, which detects that the value of minimum K changes. In some cases, such detection may be performed more easily, for instance, if a new value of minimum K (Kmin) is signaled explicitly. However, the change of Kmin may also be indicated implicitly, i.e. by signaling a different parameter. For example, if a TDRA table to be applied for interpreting the resource allocation included in the DCI changes, the Kmin may also change. This is because different TDRA tables may have different minimum value of K (e.g. K0 or K2). Thus, the switching detection circuitry 830 may be configured to judge upon reception of the control information whether or not the current minimum value of K changes by the control information.

By determining that K is not smaller than the first minimum scheduling gap and the second minimum scheduling gap, the Kmin is set to the larger one of the current Kmin and the new Kmin (signaled by the recently received control information).This can be implemented as an additional condition which does not immediately apply the newly signaled Kmin value in case the new value is lower than the current value. As is clear to those skilled in the art, a corresponding implementation is an additional condition which does not change the current Kmin to the new Kmin unless the new Kmin is larger than the current Kmin.

The switching interval may be one or more slots long. In a simple case, the switching interval equals to the switching slot. However, there may be more than one slots involved in switching. One non limiting example in the BWP related embodiment the switching interval can be set to (at least) the transition period from a first BWP to a second BWP.

In general, when receiving control information indicating a minimum value of K (henceforth referred to as Kmin_new) that is different than the value currently applying minimum value of K (henceforth referred to as Kmin_cur), the circuitry may determine that the minimum value of K is the maximum of the Kmin_new and Kmin_cur.

The above mentioned communication device capable of determining the Kmin in this way during switching is more flexible and may (but does not have to) use the Kmin in order to improve its power management. In particular, according to an embodiment, the circuitry 230 (or the terminal circuitry 810 may further include a power saving circuitry not shown in Figure 8), in operation, switches off the transceiver and/or at least a part of said circuitry for the duration of the currently applied minimum scheduling gap. With this feature, the communication device may save power as mentioned above - by decoding the PDCCH more slowly, by not performing monitoring / reception of further PDCCHs, by not buffering PDSCH, and the like.

According to another aspect of this embodiment, a scheduling device 250 is provided that comprises a circuitry 270 and a transceiver 260 for receiving and transmitting signals. The circuitry 270, in operation, controls the transceiver 260 to receive or transmit data K time slots after (or starting from) transmission of a scheduling grant, wherein K is not smaller than a minimum scheduling gap. An exemplary functional structure of the circuitry 270 is shown in Figure 8 as network node circuitry 850. The control of the transceiver 260 may be performed by the reception / transmission control circuitry 860. The circuitry 850 (in particular the reception / transmission control circuitry 860), in operation, further controls the transceiver 260 to transmit control information.

The circuitry 850 (in particular, the resource management circuitry 870), in operation, may determine, when/if/that (whether or not) a minimum scheduling gap of a given communication device 210 is to be changed. The resource management circuitry 870 may, thus, determine when/if/that (whether or not) control information indicating a corresponding change of the minimum gap is (to be) transmitted to the given communication device 210 by the reception / transmission control circuitry 860. This decision may, for instance, be based on the power status, settings, a corresponding request, and/or the required QoS of said communication device 210 and/or of other communication devices communicating in the cell of the scheduling device 250. In other words, the resource management circuitry 817 may perform the determination of schedule for a plurality of terminals, which includes determining the speed of scheduling as well as the amount and timing of resources for scheduling the data for the respective UEs.

In other words, the circuitry 870, in operation, may determine the resources on which data are to be received from or transmitted to communication devices in its cell. In general, the circuitry 870 may also determine the scheduling gap K (e.g., KO/K2) between such resources and the corresponding DCI/scheduling grant/PDCCH that notifies a UE (that is to receive/transmit on said resources) of said resources. In general, the circuitry 870 may determine the scheduling gap in accordance with the minimum scheduling gap that currently applies to the UE for which the DCI is intended.

In the case that the resource management circuitry has decided that the minimum scheduling of a given UE is to be changed, the circuitry 870 may, for some interval determine the resources/scheduling gap in accordance with the new value of the minimum scheduling gap and/or in accordance with the old value of the minimum scheduling gap. In particular, the interval may start from or may be the slot in which the DCI indicating the change of the minimum scheduling gap is transmitted or received; the interval may correspond to a BWP switching transition time. For instance, during said interval, the circuitry 870 may only determine that a value of K that is larger or equal than a minimum scheduling gap is indicated in DCI.

In general, the scheduling grant may include a reference to (or indication of) an entry of a time domain resource allocation, TDRA, table, which may comprise a plurality of entries, each entry specifying a respective time domain resource allocation including a value of K. As mentioned above, signaling usage of certain TDRA table may implicitly indicate that Kmin changes, if the TDRA table changes.

It is noted that the scheduling grant does not necessarily include an indication of the TDRA table to which it refers. In other words, in general, the scheduling grant does not necessarily explicitly specify the TDRA table that includes the entry referenced/indicated in the scheduling grant. The indication of an entry in the scheduling grant may, in general, only indicate which entry of the entries of the currently applicable table is the entry that is to be used to determine the resources on which data is to be transmitted/received, and, in general, may not indicate the current table.

For example, a TDRA table is pre-configured by a higher-layer protocol semi-statically, e.g for a given BWP. The entries referred to in a scheduling DCI are then entries to that pre-configured, applicable TDRA table. In another example, the TDRA table can also be switched by a DCI which may but does not need to be the scheduling DCI.

As shown in the examples shown in Figures 5 and 6, since the scheduling flexibility is limited by TDRA table configurations whose K0 values are limited for better power saving gain, some slots cannot be reached if using the method in current standard during BWP switching. Since the cross-slot scheduling adaptation can be realized by either multiple-BWP operation or without BWP-switching, all the above-mentioned embodiments I. to IV. can be applied in any of the following alternatives of indicating the change in Kmin:
a) Indication of changing of TDRA tables by BWP switching in DCI. In other words, if a BWP is associated with a specific TDRA, when the DCI indicates change of BWP, it also indicates possible change of TDRA. If TDRA changed, it may mean that also the minimum scheduling gap (Kmin) changed.
b) Indication of a subset of TDRA entries, e.g., bit-map based indication. If the subset of the TDRA entries has a different Kmin, then by signaling the applicable subset, the Kmin may also change.
c) Indication of one active table from multiple configured TDRA tables. This differs from the above point a) in that it does not require BWP supporting operation (but can still work with it). If the TDRA table changes, the Kmin may also change.
d) Indication of the minimum applicable value. This option corresponds to explicit indication of the new applicable Kmin.

It is noted that there may be further possibilities of indicating / determining that Kmin has changed and that the present disclosure is not limited to any of them. Moreover, these indication / determination options may all be combined with any of the Embodiments I to IV. With our Embodiments I to IV and the above four options a) to d), there are thus sixteen exemplary implementation possible based thereon.

In general, the control information may include a reference to a second TDRA table from a set of TDRA tables, other than a first TDRA table, currently applied, and being from the set of the TDRA tables. In general, the circuitry (230, 810/830) may, in operation, then determine the second minimum scheduling gap as the minimum value of K among the entries of the second TDRA table. This approach covers alternatives a) and c) as mentioned above.

In general, there may be a plurality of different TDRA tables. They may be fixed in standard (all or some of them) or configurable, for example by RRC semi-statically or statically. Determining 830 the first minimum scheduling gap is performed as determining of the minimum K among all entries of the first table. Correspondingly, determining 830 the second minimum scheduling gap is performed as determining of the minimum K among all entries of the second table. The determination may be performed by checking all entries of the TDRA table, or by receiving/storing the Kmin together with the TDRA table, or by checking only the first or the last entry in the TDRA table (if the entries are ordered in an ascending or descending order of K), or in any other way. The minimum value of K may be determined by obtaining a corresponding signaling indicating the minimum value of K. This signaling may be received table separately (e.g., in time domain) or together (e.g., in the same DCI as the TDRA table).

Furthermore, in general, the control information and the scheduling grant may be transmitted in the same DCI in a PDCCH; and the reference to a TDRA table may be a reference to that TDRA table out of the first TDRA table and the second TDRA table having the larger minimum scheduling gap.

In other words, during switching between a first table and a second table, out of these tables the one is applied which has the higher Kmin. Herein "applying" means that the DCI field specifying time domain resource (index) refers to that table.

More specifically, the control information indicating a switch of the minimum value of K may be transmitted in the same DCI/PDCCH/slot as a scheduling grant, which specifies resources on which data is to be transmitted/received by the UE. Furthermore, in order to specify said resources, said scheduling grant may include an indication of which entry of an (the relevant) TDRA table is used to specify the scheduled resources and, thus, should be used by the UE to determine the scheduled resources. Thus, when the first TDRA table has the larger minimum scheduling gap, a UE determines that the entry indicated in the scheduling grant is in the first TDRA table; and when the second TDRA table has the larger minimum scheduling gap, a UE determines that the entry indicated in the scheduling grant is in the second TDRA table.

In other words, that a scheduling grant refers to a TDRA table here means that the scheduled resources are specified/indicated using said TDRA table: A UE can thus determine the scheduled resources by selecting the entry indicated in the scheduling grant from said table; and a scheduling device has determined the indication of which entry is indicated in the scheduling grant such that the entry indicated in the scheduling grant, when selected from said table, corresponds to the scheduled resources.

In an exemplary implementation, corresponding to the above-mentioned alternative a), the control information may include instruction to switch from a first bandwidth part (BWP), which is currently used for reception or transmission of data, to a second BWP. In general, the first BWP may be associated with a first TDRA table, which has the first minimum scheduling gap; and the second BWP may be associated with a second TDRA table having the second minimum scheduling gap.

In general, a BWP may be associated with a respective TDRA table. This association may be configurable for instance by the RRC upon establishment or modification of a connection. However, it may also be configurable in a different way or partially or entirely fixed and defined by standard.

Said (switching) interval may, in case of BWP switching, correspond to a transition period T starting by the slot in which the control information including BWP switching was received. After the transition period T, the second BWP is used. However, the present invention is not limited thereto. It is noted that switching period may not be needed for the BWP switching and/or Kmin switching and may be set to 0 and thus, the Kmin determination only applies to the same slot in which the scheduling grant is received together with the BWP or general Kmin switching. In other implementations the interval may be given as a sum of the BWP transition period and an additional period caused by Kmin switching or another factor.

In other words, in some exemplary implementations, a UE is configurable with (at least) two different TDRA tables for cross-slot scheduling adaptation. TDRA table #1 is for a slower scheduling with a larger minimum K0 value among the TDRA entries, while TDRA table #2 supports a faster scheduling with a shorter minimum K0 value in TDRA entries or vice versa. During the TDRA switching:
- According to embodiment combination #I-c): If a UE is switched from the slower scheduling to the faster scheduling, the PDSCH scheduling uses TDRA table #1, and the UE does not expect that the applied scheduling/assignment timing gap is shorter than the larger of the minimum K0 values. When to switch from slower scheduling to faster scheduling, the DCI to schedule PDSCH with table switching indication function can thus only schedule PDSCH with slower scheduling time value after switching DCI and during the switching period.
- Still according to embodiment combination #I-c): If a UE is switched from a faster scheduling to a slower scheduling, the PDSCH scheduling already uses TDRA table of the slower scheduling, i.e. in this case the new table, and the UE thus does not expect the applied scheduling/assignment timing gap is shorter than the larger of the minimum K0 values. When to switch from the faster scheduling to the slower scheduling, the DCI to schedule PDSCH with table switching indication function can only schedule PDSCH with slower scheduling time value after switching.

Moreover, in some exemplary implementations, a UE is configured with (at least) two BWPs with different TDRA tables for cross-slot scheduling adaptation. BWP#1 is a slower BWP with larger minimum K0 value in TDRA entries, while BWP#2 is a faster BWP with shorter minimum K0 value in TDRA entries. During the BWP switching:
- According to embodiment combination #I-a): If a UE is switched from the slower BWP to the faster BWP, the PDSCH scheduling uses TDRA table of the slower BWP#1, and the UE does not expect that the applied scheduling/assignment timing gap is shorter than the transition period. When to switch from slower scheduling to faster scheduling, the DCI to schedule PDSCH with switching indication function can only schedule PDSCH with slower scheduling time value after switching DCI and during the switching period.
- Still according to embodiment combination #I-a): If a UE is switched from a faster BWP to a slower BWP, the PDSCH scheduling uses TDRA table of the slower BWP#1, and the UE does not expect the applied scheduling/assignment timing gap is shorter than the transition period. When to switch from the faster scheduling to the slower scheduling, the DCI to schedule PDSCH with switching indication function can only schedule PDSCH with slower scheduling time value after switching

Following the alternative b) mentioned above, the control information may include a reference to a subset of entries of the TDRA table that is currently used. The circuitry, in operation, may then determine the second minimum scheduling gap as the minimum value of K among the entries of the subset of entries of the TDRA table. The signaling may be performed in a form of a bitmap.

In particular, a bitmap may include A bits, A being an integer larger than one, for the respective A entries (rows) of the TDRA table. Each bit indicates whether or not the entry belongs to the subset.

Besides bitmap, an indication of subset of all the entries of the TDRA table can also be used. The possible combinations of the entries can be RRC-configured beforehand. One of the combination is indicated by DCI.

In summary, in some exemplary implementations, UE is indicated by DCI of a subset of TDRA entries, e.g., bit-map based indication for cross-slot scheduling and:
- According to combination of Embodiment #I-b): If the minimum K0 value of the subset of TDRA entries is larger than the minimum K0 value of the original set of TDRA entries, the PDSCH scheduling in this DCI uses the indicated subset of TDRA entries.
- Still according to combination of Embodiment #I-b) : If the minimum K0 value of the subset of TDRA entries is smaller than the minimum K0 value of the original set of TDRA entries, the PDSCH scheduling in this DCI uses the original set of TDRA entries.

In general, the control information may include a field specifying the second minimum scheduling gap, which corresponds to the option d) mentioned above. In other words, UE is configurable with (at least) two different values of minimum scheduling gap K). During switching between two different values of minimum K, the large of the two switched minimum Ks is applied. It is noted that this embodiment may be implemented also in the context of TDRA table switching and BWP switching.

For example, according to combination of Embodiment I-d) irrespectively of the Kmin derived from the two tables between which the switching is performed, new Kmin may be set by explicit signaling (DCI or RRC or any other). When such setting is performed, during the switching, the larger of the two Kmin values (current and new) is forced. In other words, the entry of the applicable TDRA table is used (all columns apart from K), but the Kmin is set separately. If the TDRA entry signaled in the DCI has K lower than the forced Kmin, the K from the entry is not used and the Kmin is used instead. If the TDRA entry signaled in the DCI has K equal to or greater than the forced Kmin, then the K from the entry is applied.

Similarly, still according to combination of Embodiment I-d), irrespectively of the Kmin derived from the association with the BWPs between which the switching is performed, new Kmin may be set by explicit signaling (DCI or RRC or any other). When such setting is performed, during the switching (i.e. setting of the new Kmin) of Kmin, the larger of the two Kmin values (current and new) is forced. In other words, the entry of the TDRA table associated with the applicable BWP is used (all columns apart from K), but the Kmin is set separately. If the TDRA entry signaled in a DCI during the switching has K lower than the forced Kmin, the K from the entry is not used and the Kmin is used instead. If the TDRA entry signaled in the DCI has K equal to or greater than the forced Kmin, then the K from the entry is applied.

All embodiment-i-based combinations can also be summarized as that the larger minimum K0 value is selected among the two switched minimum K0 values during the switching. The same applies for values of minimum K2 or generally minimum scheduling gap for any kind of link for which cross-slot scheduling is performed.

It is noted that above, the embodiments and examples were described with regard to a communication device. However, as the present disclosure refers to a message exchange between the base station and the communication device, a scheduling device and the methods corresponding to the scheduling device and the communication device are also provided.

In particular, a scheduling device is provided comprising: a transceiver for receiving and transmitting signals; and a circuitry that, in operation, controls the transceiver to: receive data from or transmit data to a user, equipment, UE, K time slots after receiving a scheduling grant, wherein K is not smaller than a minimum scheduling gap, and transmit control information to the UE; and when the control information indicates a second minimum scheduling gap different from a first minimum scheduling gap currently applied for scheduling grants transmitted to the UE, determines that, for scheduling grants transmitted to the UE, K is not smaller than the first minimum scheduling gap and the second minimum scheduling gap for an interval starting from the transmission of the control information.

Moreover, a method is provided for receiving and transmitting signals, the method including the steps of: receiving or transmitting data K time slots after receiving a scheduling grant, wherein K is not smaller than a minimum scheduling gap; receiving control information; and when the control information indicates a second minimum scheduling gap different from a first minimum scheduling gap currently applied, determining that K is not smaller than the first minimum scheduling gap and the second minimum scheduling gap for an interval starting from the reception of the control information.

Still further, a method is provided for receiving and transmitting signals, the method including the steps of: receiving data from or transmitting data to a user equipment, UE, K time slots after transmitting a scheduling grant, wherein K is not smaller than a minimum scheduling gap; transmitting control information to the UE; and when the control information indicates a second minimum scheduling gap different from a first minimum scheduling gap currently applied for scheduling grants transmitted to the UE, determining that, for scheduling grants transmitted to the UE, K is not smaller than the first minimum scheduling gap and the second minimum scheduling gap for an interval starting from the transmission of the control information.

### Embodiment II

Alternatively, or in addition to embodiment I, embodiment II provides an offset to be configured between the scheduling grant and the scheduled resources in case of Kmin switching.

In particular, according to embodiment II, a communication device that comprises a circuitry and a transceiver for receiving and transmitting signals is provided. The circuitry, in operation, controls the transceiver to receive, in a first time slot, a scheduling grant for reception or transmission of data in a time slot located a number K of time slots from the first time slot, wherein K is not smaller than a minimum scheduling gap. The circuitry, in operation, further controls the transceiver to receive or transmit data in a second time slot determined according to the number K. Moreover, the circuitry, in operation, controls the transceiver to receive control information. The circuitry, in operation, further determines, when the control information indicates a second minimum scheduling gap different from a first minimum scheduling gap currently applied, the second time slot to be at least a sum of K and an offset of N time slots after the first time slot for scheduling grants received in an interval starting from the reception of the control information.

When to switch between slower and faster scheduling (from a larger Kmin value to a smaller Kmin value), an offset value of the time reference may be indicated, which is applied to the scheduling timing information. This indication may be provided in any manner. For example, it may be derived from the BWP transition period T mentioned above. It may be fixed in the standard, it may be configurable by RRC or it may even by indicated in a DCT on PDCCH.

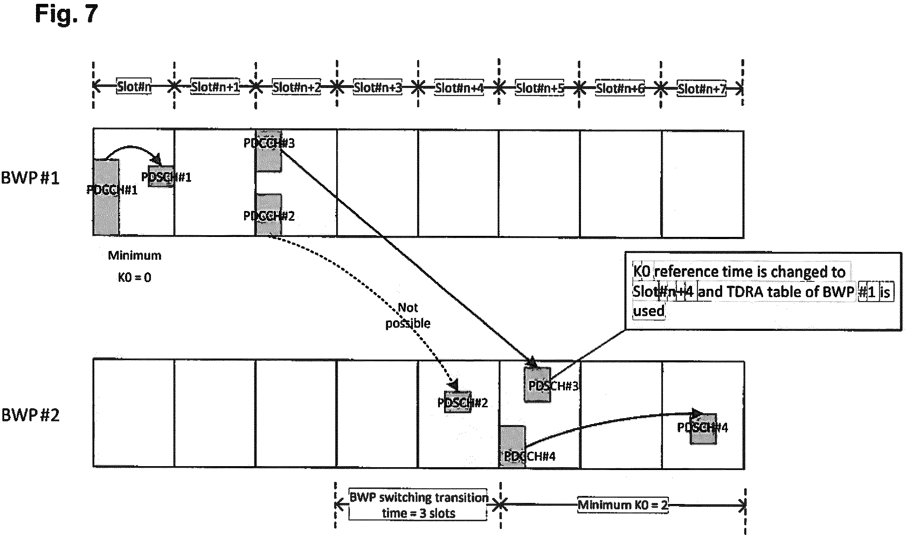

Figure 7 shows an exemplary implementation of Embodiment II in the context of BWP switching. It shows eight slots #n to #n+7 in each of two BWPs, namely BWP#1 and BWP#2. A UE operates at first in BWP#1 and receives a PDCCH#1 in slot#n, the PDCCH including a DCI which carries a scheduling grant for a PDSCH#1 in the same slot#n. Currently applied minimum K0 = 0 (Kmin_cur = 0), which, in the present example is associated with BWP#1. Then, in slot#n+2, PDCCH#2 and PDCCH#3 are received. One of the PDCCHs carries DCI indicating the change of BWP#1 to BWP#2. BWP switching may be configured to involve a switching period (transition period) of one or more time slots. In this exemplary implementation, the switching period is set to 3 slots. Moreover, BWP#2 is associated with a TDRA table having minimum scheduling gap of K0=2 (Kmin_new = 2). In this situation, as can be seen in the figure, PDCCH#2 cannot reach the PDSCH#2 in BWP#2 as PDSCH#2 is located within the BWP switching transition time. In order to avoid such situation, when switching between BWPs, the reference time from which the slot of the scheduled resources is calculated, may be shifted (offset) to Slot#n+4 and the TDRA table of BWP#1 is still used, resulting in PDSCH#3, which is located in Slot#n+5, being reachable by indicating K0=0 in PDCCH#3.

As a general rule, if in a slot a switch from BWP#1 to BWP#2 is indicated and the BWP switching interval is T (in integer slots), then the offset N may be calculated as N = T - Kmin_cur, Kmin_cur referring to the Kmin associated with the current BWP#1, i.e., the BWP used before the slot indicating the switch. This corresponds to the present example, in which the offset is N = 3 - 0 = 3 .

It is also possible to employ, after the slot indicating the switch (during the switching interval), the second table associated with the second BWP#2 as an alternative convention. In such case, the offset may be calculated as N = T - Kmin_new, the Kmin_new referring to the Kmin associated with BWP#2. In this case, the offset would be N = 3-2 =1, resulting in PDSCH#3, being reachable by indicating K0=2 in PDCCH#3 as is illustrated in Figure 7.

In Figure 7, PDCCH#4 is received in Slot#n+5 after the switching of BWP is completed. It utilizes the Kmin_new, here minimum K0=2 and, thus, refers to Slot#n+7, in which PDSCH#4 is located, or a later slot.

It is assumed here that PDCCH may only be allocated in first M symbols of a slot. Thus, after reception of PDCCHs in those M symbols, no further PDCCH monitoring in the same slot is necessary. This assumption may apply to any of the embodiments and examples described herein. However, in a general case including systems different from the current NR, especially in context of cross-slot scheduling, PDCCH may also be mapped onto any other symbols of a slot.

In general, the offset N may be determined by at least one of the following i) an indication in the control information, and ii) a transition period after which switching from one bandwidth path, BWP, to another BWP takes effect. There are further possibilities and advantageous implementations, which are briefly exemplified below.

The offset value may, for instance, be calculated by either a base station and/or a UE based on information which is available to both the base station and the UE.

For example, the offset value can be calculated based on one or multiple or all factors such as factors relating to the switching (transition) period, the minimum K0 value of the target TDRA table, the indicated K0 values in the DCI, or the TDRA table entry in the DCI. The factors relating to the switching periods may be the time interval set (or necessary) for switching between Kmin and/or the time interval set (or necessary) for switching between the TDRA tables and/or the time interval set (or necessary) for switching between two BWPs.

As shown in the example referencing Figure 7, if the transition period T is 3 slots and the used K0 value of the target TDRA table is 1 slot, then the indicated offset value is 3 -1 = 2 slots. Thus, factors of transition period length and value of signalled K may be used in this case to determine the offset N.

In general, the offset value may be obtained by a UE in one or more of the following manners. The offset may be a fixed value defined in the standard. There may be one value fixed for all scenarios or there may be more fixed values or values depending in a fixed manner on another parameter(s) (such as switching and/or transition period).

In case of multiple possible values for offset, each offset value is mapped to a case of switching from a first TDRA table/BWP to a second one. In other words, multiple offset values may be configured, and each such offset value may be mapped to a combination of a source TDRA table/BWP and a target TDRA table/BWP (e.g., may apply to (or be used in case of) a switch from the source table/BWP to the target table/BWP). In particular, each value of the offset may be used for one or more of the following:
- one or more target BWPs/TDRA tables/numerologies, and/or
- one or more source BWPs/TDRA tables/numerologies, and/or
- one or more specific combinations of a source BWP/TDRA table/numerology and a target BWP/TDRA table/numerology.

In other words, depending on the particular target BWP and/or source BWP, one of the pre-configured offset values is taken. Alternatively, depending on the particular target TDRA and/or source TDRA, one of the pre-configured offsets is taken. Similarly, numerology may be taken to determine the offset.

However, the present disclosure is not limited to the case in which the offset is derived at the UE and the gNB in a similar way based on predefined parameters and/or based on the standard. Rather, the offset value may be configured by higher-layer signaling such as RRC signaling. In particular, in an exemplary implementation, the offset value N is configured for a UE by the gNB via RRC signaling. One or multiple values for the offset may be pre-configured by the RRC.

In other words, the RRC may configure directly the value of offset to be used by the UE and reconfigure it any time. Alternatively, the RRC may configure several possible values of the offset for the UE. UE then selects the appropriate value for N on its own, e.g. based on value of some further parameters. The selection rule is known to both the gNB and the UE.

Similarly to the selection of an offset out of the pre-configured offsets described above, each value of offset may be mapped to/correspond to one or more of:
- one or more target BWPs/TDRA tables/numerologies, and/or
- one or more source BWPs/TDRA tables/numerologies, and/or
- one or more specific combinations of a source BWP/TDRA table/numerology and a target BWP/TDRA table/numerology.

In general, signaling of the offset, N, is not limited to employing the RRC. Rather, the offset may be signaled in another manner, e.g. by employing a DCI. All above options mentioned for the RRC signaling may also apply (signaling directly the applicable offset value or indicating a set for selecting the offset value, or a combination of both, or the like).

The UE derives and/or calculates by one or multiple of the transition period, the minimum K0 value of the target TDRA table, the indicated K0 values in the DCI, or the TDRA table entry in the DCI.

According to a combination Embodiment #II-a), to make the PDSCH scheduling flexibility not impacted by the K0 values configured for power saving, the DCI (in general, the control information) with switching indication functionality also indicates an offset value applied to timing reference of K0. This offset value is added to the starting slot containing the DCI and used to calculate the scheduled PDSCH slot. This embodiment aims to shift the actually applied K0 value during TDRA table switching. This is independent from the choice of which TDRA table to use during switching.

### Embodiment III

According to this embodiment, when switching between a slower scheduling and a faster scheduling, the control information (such as DCI) carrying such switching indication does not schedule data (such as PDSCH).

When both the gNB and the UE handle according to this rule, the knowledge of this rule may be used, for example to interpret the fields within the control information.

According to a first exemplary implementation, when a UE detects the minimum K value changing (by any of options a) to d) mentioned above), the UE will interpret the DCI fields in such a manner that there is only a field for switching (an possibly one or more fields for other transmission parameters changing), but no resource allocation field. When, on the other hand, the UE detects that the minimum K value is not changing with the received control information, then the control information carries also resource allocation field on a predefined position.

According to a combination embodinment #III-a), a UE is configured with (at least) two BWPs with respective different TDRA tables for cross-slot scheduling adaptation. BWP#1 is a slower BWP with larger minimum K0 value in TDRA entries, while BWP#2 is a faster BWP with shorter minimum K0 value in TDRA entries. During BWP switching between the two, the DCI with BWP switching indication functionality does not schedule PDSCH.

According to a combination embodinment #III-b), a UE is indicated by DCI of a subset of TDRA entries, e.g., bit-map based indication for cross-slot scheduling. Moreover, the DCI with such switching indication functionality does not schedule PDSCH.

According to a combination embodinment #III-c), a UE is configured with (at least) two different TDRA tables for cross-slot scheduling adaptation. The first TDRA table is for a slower scheduling with larger minimum K0 value in its entries, while the second TDRA table is for a faster scheduling with shorter minimum K0 value in its entries. During TDRA table switching switching between the two tables, the DCI carrying such switching indication does not schedule PDSCH.

According to a combination embodinment #III-d), a UE receives control information with explicit signaling of the minimum K value to be used, i.e. switching indication to switch from the currently applied minimum K to the new minimum K. The control information, e.g. DCI, carrying such switching indication does not schedule data (PDSCH).

As noted above, the embodiments and examples were described with regard to a communication device. However, as the present disclosure refers to a message exchange between the base station and the communication device, a scheduling device and the methods corresponding to the scheduling device and the communication device are also provided.

Moreover, a scheduling device is provided comprising: a transceiver for receiving and transmitting signals; and a circuitry that, in operation, controls the transceiver to: transmit to a user equipment, UE, in a first time slot, a scheduling grant for reception of data from or transmission of data to the UE, wherein the reception is in a time slot located a number K of time slots from the first time slot, wherein K is not smaller than a minimum scheduling gap, receive or transmit data in a second time slot determined according to the number K from or to the UE, and transmit control information to the UE; and when the control information indicates a second minimum scheduling gap different from a first minimum scheduling gap currently applied for scheduling grants transmitted to the UE, determines the second time slot to be at least a sum of K and an offset of N time slots after the first time slot for the scheduling grant if it is transmitted in an interval starting from the reception of the control information.

Moreover, a method is provided for receiving and transmitting signals, the method including the steps of: receiving, in a first time slot, a scheduling grant for reception or transmission of data in a time slot located a number K of time slots from the first time slot, wherein K is not smaller than a minimum scheduling gap; receiving or transmitting data in a second time slot determined according to the number K; receiving control information; and when the control information indicates a second minimum scheduling gap different from a first minimum scheduling gap currently applied, determining the second time slot to be at least a sum of K and an offset of N time slots after the first time slot for the scheduling grant if it is received in an interval starting from the reception of the control information.

Still further, a method is provided for receiving and transmitting signals, the method including the steps of: transmitting to a user equipment, UE, in a first time slot, a scheduling grant for reception of data from or transmission of data to the UE, wherein the reception is in a time slot located a number K of time slots from the first time slot, wherein K is not smaller than a minimum scheduling gap, receiving or transmitting data in a second time slot determined according to the number K from or to the UE, and transmitting control information to the UE; and when the control information indicates a second minimum scheduling gap different from a first minimum scheduling gap currently applied for scheduling grants transmitted to the UE, determining the second time slot to be at least a sum of K and an offset of N time slots after the first time slot for the scheduling grant if it is trans mitted in an interval starting from the reception of the control information.

When to switch between slower and faster (or two TDRA tables in general) scheduling, the DCI with switching indication functionality does not schedule PDSCH

### Embodiment IV

The present embodiment may be combined with any of the embodiments described beforehand, or be employed stand-alone.

Accordingly, the minimum scheduling gap applicable to a time slot carrying common control information may be set to zero.

Common Serach Space (CSS) is carried in a pre-configured (by the base station) CORESET called CORESET 0. The term "common" refers to the fact that this CORESET carries control information directed to all or a group of communication devices. Accordingly, more than one communication devices may read / decode the information. A TDRA table associated with CORESET 0 has typically at least one or more entries with K=0. This is because the message is likely to be read by various different communication devices which can have need to decode the information rapidly.

In an exemplary implementation of the present embodiment, thus, for the common message (control information) and dedicated (UE specific) control message (control information) in the common search space in CORESET 0, a common TDRA table is used, which contains at least one K0=0 entry. As a consequence, the minimum scheduling gap is set to zero for slots in which CSS (CORESET 0) is located.

In other words, at least for the slots potentially with common message and CORESET 0, the minimum K0=0 for both common and dedicated control message is assumed by the Ue and the gNB. Since UE needs to use fast processing timeline to buffer all the PDSCH symbols and process PDCCH in these slots, using slow timeline to process dedicated scheduling is not efficient anymore. No power saving gain could be achieved in such cases anyhow.

One option is to directly reuse common/default TDRA tables for both common and dedicated messages in all the search spaces, in the above mentioned slots carrying CSS, or generally in a set of configured slots. For example, the UE and the gNB use the TDRA table associated with the common control information also for the dedicated information.

Alternatively, the common control information may be associated with a TDRA table different from the dedicated control information. The other option is, for dedicated message, in the slots that potentially have common message and CORESET 0, to temporally assume K0=0 while still use the S and L values in the configured TDRA table. This is able to keep the scheduling flexibility as much as possible.

The above rule may be also applied in the cases of the embodiments I to IV, i.e. even when switching of Kmin is applied, in the slots belonging to switching period and carrying CSS, still the minimum K=0 can be forced.

### Embodiment V

The present embodiment can be combined with any of the preceding embodiments. Moreover, this embodiment works similarly as the above embodiments but for different kind of data (reference signals).

It is noted that the present disclosure is not limited to scheduling user data. In particular, in one exemplary implementation the scheduling (also referred to as "triggering" in this context) regards scheduling of channel state information (CSI) reference signals (CSI-RS), which are then transmitted from the network node (gNB) to the communication device (UE).

The triggering of the transmission is performed by a DCI, which includes the corresponding trigger field. If the field indicates that CSI-RS is transmitted, the CSI-RS is transmitted certain time interval after the triggering. The gap between the trigger and the transmission is configured semi-statically, by the RRC. When the RRC changes the triggering gap, similar issues as those described in the above embodiments may arise.

However, it is noted that the above example referring to the RRC is not limiting and the gap between the PDCCH (DCI) trigger and the CSI-RS may also be configured dynamically by a DCI, as in case of K0 described above. Moreover, the CSI-RS scheduling may be extended to a concept similar to TDRA tables and/or BWP as described above.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

In an embodiment, provided is a computer readable medium storing executable instructions. The instructions, when executed, cause a communication device to perform the steps of the above method for transmitting or receiving a signal to/from a base station.

In an embodiment, provided is a computer readable medium storing executable instructions. The instructions, when executed, cause a base station to perform the steps of the above method for transmitting or receiving a signal to/from a communication device.

The present disclosure can be realized by any kind of apparatus, device or system having a function of communication, which is referred to as a communication apparatus.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Clause 1: A communication device comprising: a transceiver for receiving and transmitting signals; and a circuitry that, in operation, controls the transceiver to: receive or transmit data K time slots after receiving a scheduling grant, wherein K is not smaller than a minimum scheduling gap, and receive control information; and when the control information indicates a second minimum scheduling gap different from a first minimum scheduling gap currently applied, determines that K is not smaller than the first minimum scheduling gap and the second minimum scheduling gap for an interval starting from the reception of the control information.

Clause 2: The communication device according to clause 1, wherein the scheduling grant includes a reference to an entry of a time domain resource allocation, TDRA, table; and the TDRA table comprises a plurality of entries, each entry specifying a respective time domain resource allocation including a value of K.

Clause 3: The communication device according to clause 2, wherein the control information includes a reference to a second TDRA table from a set of TDRA tables, other than a first TDRA table, currently applied, and being from the set of the TDRA tables; the circuitry in operation determines the second minimum scheduling gap as the minimum value of K among the entries of the second TDRA table.

Clause 4: The communication device according to clause 3, wherein the control information and the scheduling grant are transmitted in the same downlink control information, DCI, in a physical downlink control channel; and the reference to a TDRA table is a reference to that TDRA table out of the first TDRA table and the second TDRA table having the larger minimum scheduling gap.

Clause 5: The communication device according to clause 2, wherein the control information includes instruction to switch from a first bandwidth part, BWP, currently used for reception or transmission of data to a second BWP; the first BWP is associated with a first TDRA table having the first minimum scheduling gap; and the second BWP is associated with a second TDRA table having the second minimum scheduling gap.

Clause 6: The communication device according to clause 2, wherein the control information includes a reference to a subset of entries of the TDRA table currently used; and the circuitry, in operation, determines the second minimum scheduling gap as the minimum value of K among the entries of the subset of entries of the TDRA table.

Clause 7: The communication device according to clause 1, wherein the control information includes a field specifying the second minimum scheduling gap.

Clause 8: The communication device according to any of clauses 1 to 7, wherein the minimum scheduling gap applicable to a time slot carrying common control information is set to zero.

Clause 9: A communication device comprising: a transceiver for receiving and transmitting signals; and a circuitry that, in operation, controls the transceiver to: receive, in a first time slot, a scheduling grant for reception or transmission of data in a time slot located a number K of time slots from the first time slot, wherein K is not smaller than a minimum scheduling gap, receive or transmit data in a second time slot determined according to the number K, and receive control information; and when the control information indicates a second minimum scheduling gap different from a first minimum scheduling gap currently applied, determines the second time slot to be at least a sum of K and an offset of N time slots after the first time slot for the scheduling grant if it is received in an interval starting from the reception of the control information.

Clause 10: The communication device according to clause 9, wherein the offset N is determined by at least one of the following indication in the control information, and transition period after which switching from one bandwidth path, BWP, to another BWP takes effect.

Clause 11: A scheduling device comprising: a transceiver for receiving and transmitting signals; and a circuitry that, in operation, controls the transceiver to: receive data from or transmit data to a user, equipment, UE, K time slots after receiving a scheduling grant, wherein K is not smaller than a minimum scheduling gap, and transmit control information to the UE; and when the control information indicates a second minimum scheduling gap different from a first minimum scheduling gap currently applied for scheduling grants transmitted to the UE, determines that, for scheduling grants transmitted to the UE, K is not smaller than the first minimum scheduling gap and the second minimum scheduling gap for an interval starting from the transmission of the control information.

Clause 12: A scheduling device comprising: a transceiver for receiving and transmitting signals; and a circuitry that, in operation, controls the transceiver to: transmit to a user equipment, UE, in a first time slot, a scheduling grant for reception of data from or transmission of data to the UE, wherein the reception is in a time slot located a number K of time slots from the first time slot, wherein K is not smaller than a minimum scheduling gap, receive or transmit data in a second time slot determined according to the number K from or to the UE, and transmit control information to the UE; and when the control information indicates a second minimum scheduling gap different from a first minimum scheduling gap currently applied for scheduling grants transmitted to the UE, determines the second time slot to be at least a sum of K and an offset of N time slots after the first time slot for the scheduling grant if it is transmitted in an interval starting from the reception of the control information.

Clause 13: A method for receiving and transmitting signals, the method including the steps of: receiving or transmitting data K time slots after receiving a scheduling grant, wherein K is not smaller than a minimum scheduling gap; receiving control information; and when the control information indicates a second minimum scheduling gap different from a first minimum scheduling gap currently applied, determining that K is not smaller than the first minimum scheduling gap and the second minimum scheduling gap for an interval starting from the reception of the control information.

Clause 14: A method for receiving and transmitting signals, the method including the steps of: receiving, in a first time slot, a scheduling grant for reception or transmission of data in a time slot located a number K of time slots from the first time slot, wherein K is not smaller than a minimum scheduling gap; receiving or transmitting data in a second time slot determined according to the number K; receiving control information; and when the control information indicates a second minimum scheduling gap different from a first minimum scheduling gap currently applied, determining the second time slot to be at least a sum of K and an offset of N time slots after the first time slot for the scheduling grant if it is received in an interval starting from the reception of the control information.

Clause 15: A method for receiving and transmitting signals, the method including the steps of: receiving data from or transmitting data to a user equipment, UE, K time slots after transmitting a scheduling grant, wherein K is not smaller than a minimum scheduling gap; transmitting control information to the UE; and when the control information indicates a second minimum scheduling gap different from a first minimum scheduling gap currently applied for scheduling grants transmitted to the UE, determining that, for scheduling grants transmitted to the UE, K is not smaller than the first minimum scheduling gap and the second minimum scheduling gap for an interval starting from the transmission of the control information.

Clause 16: A method for receiving and transmitting signals, the method including the steps of: transmitting to a user equipment, UE, in a first time slot, a scheduling grant for reception of data from or transmission of data to the UE, wherein the reception is in a time slot located a number K of time slots from the first time slot, wherein K is not smaller than a minimum scheduling gap, receiving or transmitting data in a second time slot determined according to the number K from or to the UE, and transmitting control information to the UE; and when the control information indicates a second minimum scheduling gap different from a first minimum scheduling gap currently applied for scheduling grants transmitted to the UE, determining the second time slot to be at least a sum of K and an offset of N time slots after the first time slot for the scheduling grant if it is trans mitted in an interval starting from the reception of the control information.

## Claims

1. A communication device comprising:
a transceiver for receiving and transmitting signals; and
a circuitry that, in operation,
controls the transceiver to:
receive or transmit data K time slots after receiving a scheduling grant, wherein K is not smaller than a minimum scheduling gap, and
receive control information; and
when the control information indicates a second minimum scheduling gap different from a first minimum scheduling gap currently applied, determines that K is not smaller than the first minimum scheduling gap and the second minimum scheduling gap for an interval starting from the reception of the control information.

2. The communication device according to claim 1, wherein
the scheduling grant includes a reference to an entry of a time domain resource allocation, TDRA, table; and
the TDRA table comprises a plurality of entries, each entry specifying a respective time domain resource allocation including a value of K.

3. The communication device according to claim 2, wherein
the control information includes a reference to a second TDRA table from a set of TDRA tables, other than a first TDRA table, currently applied, and being from the set of the TDRA tables;
the circuitry in operation determines the second minimum scheduling gap as the minimum value of K among the entries of the second TDRA table.

4. The communication device according to claim 3, wherein
the control information and the scheduling grant are transmitted in the same downlink control information, DCI, in a physical downlink control channel; and
the reference to a TDRA table is a reference to that TDRA table out of the first TDRA table and the second TDRA table having the larger minimum scheduling gap.

5. The communication device according to claim 2, wherein
the control information includes instruction to switch from a first bandwidth part, BWP, currently used for reception or transmission of data to a second BWP;
the first BWP is associated with a first TDRA table having the first minimum scheduling gap; and
the second BWP is associated with a second TDRA table having the second minimum scheduling gap.

6. The communication device according to claim 2, wherein
the control information includes a reference to a subset of entries of the TDRA table currently used; and
the circuitry, in operation, determines the second minimum scheduling gap as the minimum value of K among the entries of the subset of entries of the TDRA table.

7. The communication device according to claim 1, wherein
the control information includes a field specifying the second minimum scheduling gap.

8. The communication device according to any of claims 1 to 7, wherein
the minimum scheduling gap applicable to a time slot carrying common control information is set to zero.

9. A communication device comprising:
a transceiver for receiving and transmitting signals; and
a circuitry that, in operation,
controls the transceiver to:
receive, in a first time slot, a scheduling grant for reception or transmission of data in a time slot located a number K of time slots from the first time slot, wherein K is not smaller than a minimum scheduling gap,
receive or transmit data in a second time slot determined according to the number K, and
receive control information; and
when the control information indicates a second minimum scheduling gap different from a first minimum scheduling gap currently applied, determines the second time slot to be at least a sum of K and an offset of N time slots after the first time slot for the scheduling grant if it is received in an interval starting from the reception of the control information.

10. The communication device according to claim 9, wherein
the offset N is determined by at least one of the following
- indication in the control information, and
- transition period after which switching from one bandwidth path, BWP, to another BWP takes effect.

11. A scheduling device comprising:
a transceiver for receiving and transmitting signals; and
a circuitry that, in operation,
controls the transceiver to:
receive data from or transmit data to a user, equipment, UE, K time slots after receiving a scheduling grant, wherein K is not smaller than a minimum scheduling gap, and
transmit control information to the UE; and
when the control information indicates a second minimum scheduling gap different from a first minimum scheduling gap currently applied for scheduling grants transmitted to the UE, determines that, for scheduling grants transmitted to the UE, K is not smaller than the first minimum scheduling gap and the second minimum scheduling gap for an interval starting from the transmission of the control information.

12. A scheduling device comprising:
a transceiver for receiving and transmitting signals; and
a circuitry that, in operation,
controls the transceiver to:
transmit to a user equipment, UE, in a first time slot, a scheduling grant for reception of data from or transmission of data to the UE, wherein the reception is in a time slot located a number K of time slots from the first time slot, wherein K is not smaller than a minimum scheduling gap,
receive or transmit data in a second time slot determined according to the number K from or to the UE, and
transmit control information to the UE; and
when the control information indicates a second minimum scheduling gap different from a first minimum scheduling gap currently applied for scheduling grants transmitted to the UE, determines the second time slot to be at least a sum of K and an offset of N time slots after the first time slot for the scheduling grant if it is transmitted in an interval starting from the reception of the control information.

13. A method for receiving and transmitting signals, the method including the steps of:
receiving or transmitting data K time slots after receiving a scheduling grant, wherein K is not smaller than a minimum scheduling gap;
receiving control information; and
when the control information indicates a second minimum scheduling gap different from a first minimum scheduling gap currently applied, determining that K is not smaller than the first minimum scheduling gap and the second minimum scheduling gap for an interval starting from the reception of the control information.

14. A method for receiving and transmitting signals, the method including the steps of:
receiving, in a first time slot, a scheduling grant for reception or transmission of data in a time slot located a number K of time slots from the first time slot, wherein K is not smaller than a minimum scheduling gap;
receiving or transmitting data in a second time slot determined according to the number K;
receiving control information; and
when the control information indicates a second minimum scheduling gap different from a first minimum scheduling gap currently applied, determining the second time slot to be at least a sum of K and an offset of N time slots after the first time slot for the scheduling grant if it is received in an interval starting from the reception of the control information.

15. A method for receiving and transmitting signals, the method including the steps of:
receiving data from or transmitting data to a user equipment, UE, K time slots after transmitting a scheduling grant, wherein K is not smaller than a minimum scheduling gap;
transmitting control information to the UE; and
when the control information indicates a second minimum scheduling gap different from a first minimum scheduling gap currently applied for scheduling grants transmitted to the UE, determining that, for scheduling grants transmitted to the UE, K is not smaller than the first minimum scheduling gap and the second minimum scheduling gap for an interval starting from the transmission of the control information.

16. A method for receiving and transmitting signals, the method including the steps of:
transmitting to a user equipment, UE, in a first time slot, a scheduling grant for reception of data from or transmission of data to the UE, wherein the reception is in a time slot located a number K of time slots from the first time slot, wherein K is not smaller than a minimum scheduling gap,
receiving or transmitting data in a second time slot determined according to the number K from or to the UE, and
transmitting control information to the UE; and
when the control information indicates a second minimum scheduling gap different from a first minimum scheduling gap currently applied for scheduling grants transmitted to the UE, determining the second time slot to be at least a sum of K and an offset of N time slots after the first time slot for the scheduling grant if it is trans mitted in an interval starting from the reception of the control information.
